# EUROPEAN PATENT APPLICATION

(11) **EP 2 309 619 A1**
(43) Date of publication of application: **13.04.2011**
(21) Application number: 09802645.3
(22) Date of filing: 06.07.2009
(51) Int. Cl.: H02J 7/02, B60L 3/00, H01M 10/44, H01M 10/48, H02J 7/00

(54) **IMBALANCE REDUCTION CIRCUIT, POWER SUPPLY DEVICE, AND IMBALANCE REDUCTION METHOD**

(30) Priority: 31.07.2008 JP 2008197724
(71) Applicant: Panasonic Corporation, Kadoma-shi Osaka 571-8501 (JP)
(72) Inventor: IIDA, Takuma, Osaka 540-6207 (JP); KIMURA, Tadao, Osaka 540-6207 (JP)
(74) Representative: Schwabe - Sandmair - Marx
(86) International application number: PCT/JP2009/003138
(87) International publication number: WO 2010/013395

(57) **Abstract**

An imbalance reduction circuit is configured to include: a temperature-related information acquisition unit for acquiring temperature-related information related to the temperature of a plurality of electric accumulators; a discharge unit for executing an equalization process for discharging the plurality of electric accumulators until terminal voltages of the respective electric accumulators become substantially equal to one another; and an equalization controller for prohibiting the discharge unit from executing the equalization process, when the temperature-related information acquired by the temperature-related information acquisition unit satisfies a low temperature condition that is set as a condition where the discharge performance of the plurality of electric accumulators deteriorates.

## Description

### Technical Field

The present invention relates to an imbalance reduction circuit for reducing imbalance of terminal voltages in a plurality of electric accumulators, a power supply device, and an imbalance reduction method.

### Background Art

In recent years, an accumulating device using an electric accumulator is incorporated with a solar battery or power generation device so as to be widely used as a power supply system. The power generation device is driven by using natural energy such as wind power or hydraulic power, or by artificial power such as an internal combustion engine. The power supply system incorporated with such an accumulating device improves energy efficiencies by accumulating surplus electric power in the accumulating device and supplying the electric power from the accumulating device when needed by a load device.

Examples of such a system include a photovoltaic generation system. In the photovoltaic generation system, an accumulating device is charged with surplus electric power when the amount of electric power generated by sunlight is greater than the amount of electric power consumed by a load device. Conversely, when the amount of electric power generated by sunlight is lower than the amount of electric power consumed by the load device, electric power is output from the accumulating device to drive the load device in order to compensate for a shortfall of electric power.

Since the photovoltaic generation system can accumulate surplus electric power that was not used in conventional technologies, the energy efficiency of the photovoltaic generation system is higher than those of power supply systems without accumulating devices.

In this kind of photovoltaic generation system, surplus electric power cannot be charged once the accumulating device is fully charged, and consequently loss arises. Therefore, in order to efficiently charge surplus electric power in the accumulating device, charge control is performed in such a manner that the State of Charge ("SOC" hereinafter) of an electric accumulator does not increase to 100%. The charge control is performed to also prevent the SOC from dropping to 0 (zero) % so that the load device can be driven as needed. In other words, the charge control is performed in the accumulating device such that the SOC fluctuates in a range of 20% to 80%.

A hybrid automobile (HEV: Hybrid Electric Vehicle) using an engine and motor is also based on such principles. When an output from the engine is greater than the motive power necessary for driving, an HEV drives its electric generator with surplus engine output to charge the accumulating device. Meanwhile, the HEV charges the accumulating device by using the motor as the electric generator during braking or deceleration of the vehicle.

Recently, a load-leveling power supply and pug-in hybrid automobile that effectively utilize nighttime electric power have attracted attention. The load-leveling power supply is a system that consumes less electric power. The load-leveling power supply stores electric power in its accumulating device during nighttime hours when electric rates are low, and uses the stored electric power during daytime hours when electric power consumption reaches the peak. The purpose of this system is to maintain the amount of electric power generation constant by leveling the amount of electric power consumption, so that a contribution can be made to efficient operation of power equipment and reduction of facility investment.

On the other hand, the plug-in hybrid automobile uses nighttime electric power. When running in an urban area where fuel efficiency is poor, the plug-in hybrid automobile is mainly driven by EV driving in which electric power is fed from its accumulating device, whereas the plug-in hybrid automobile is driven by HEV driving by which the engine and the motor are used when it runs over a long distance. The purpose of the plug-in hybrid automobile is to reduce a total amount of CO₂ emission.

Incidentally, such an accumulating device is configured by connecting a plurality of accumulating elements (electric cells, etc.) in series in order to obtain a desired output voltage. When the accumulating device is discharged deeply while the accumulated electric charge amounts of the accumulating elements vary, an accumulating element having a small accumulated electric charge amount is overdischarged in comparison with other accumulating elements. As a result, the overdischarged accumulating element deteriorates, reducing the life of the entire accumulating device.

There is known technology for suppressing such deterioration of the life of the accumulating device, wherein, when variance or imbalance occurs in the accumulated electric charge amounts (SOC) of the accumulating elements, each of the accumulating elements is discharged and a terminal voltage of each of the accumulating elements is balanced so as to eliminate the variance in the accumulated electric charge amounts.

There is also known a method for regulating equalization when abnormality occurs in a voltage detection system because equalizing a terminal voltage at the time of the occurrence of abnormality in the voltage detection system causes overdischarge of each accumulating element (see Patent Document 1, for example).

Incidentally, when the temperature or SOC of each accumulating element lowers, the discharge performance thereof deteriorates, reducing a current value at which discharge can be made. Therefore, when the temperature and SOC of each accumulating element are low, the amount of electric power that can be supplied from the accumulating element might become less than the required amount of electric power.

In contrast, discharging each accumulating element to equalize the terminal voltage thereof as described above reduces the imbalance of each accumulating element, and hence the SOC of the entire accumulating device. Thus, uniformizing each accumulating element by discharging it when its temperature is low during winter, for example, might cause a shortfall in electric power to be supplied. In the technology described in Patent Document 1, however, the equalization is limited to the situation where abnormality occurs in the voltage detection system. For this reason, the equalization is executed even when the temperature of each accumulating element is low, causing a shortfall in electric power to be supplied by the accumulating device.

### Citation List

### Patent Literature

Patent Document 1: Japanese Patent Application Publication No. 2006-101699

### Summary of Invention

An object of the present invention is to provide an imbalance reduction circuit that is capable of lowering the risk of the occurrence of a shortfall in electric power to be supplied, which can be caused when the temperature of electric accumulators decreases when equalization is performed on terminal voltages thereof, as well as to provide a power supply device and imbalance reduction method.

An imbalance reduction circuit according to one aspect of the present invention has: a temperature-related information acquisition unit for acquiring temperature-related information related to the temperature of a plurality of electric accumulators; a discharge unit for executing an equalization process for discharging the plurality of electric accumulators until terminal voltages of the respective electric accumulators become substantially equal to one another; and an equalization controller for prohibiting the discharge unit from executing the equalization process, when the temperature-related information acquired by the temperature-related information acquisition unit satisfies a low temperature condition that is set as a condition where the discharge performance of the plurality of electric accumulators deteriorates.

An imbalance reduction method according to one aspect of the present invention has: a step in which a temperature-related information acquisition unit acquires temperature-related information related to the temperature of a plurality of electric accumulators; a step in which a discharge unit executes an equalization process for discharging the plurality of electric accumulators until terminal voltages of the respective electric accumulators become substantially equal to one another; and a step in which an equalization controller prohibits the discharge unit from executing the equalization process, when the temperature-related information acquired by the temperature-related information acquisition unit satisfies a predetermined low temperature condition.

According to this configuration, the temperature-related information acquisition unit acquires the temperature-related information related to the temperature of the plurality of electric accumulators. When the temperature-related information acquired by the temperature-related information acquisition unit satisfies a low temperature condition that is set as a condition where the discharge performance of the electric accumulators deteriorates, the equalization controller prohibits the discharge unit from executing the equalization process. Thus, when there is a risk of deteriorating the discharge performance of the electric accumulators due to the decrease in the temperature thereof, the accumulated electric charge amounts of the plurality of electric accumulators are not lowered by the equalization process that discharges the electric accumulators. As a result, the configuration described above can lower the risk of the occurrence of a shortfall in electric power to be supplied, which can be caused when the temperature of the electric accumulators decreases when the equalization is performed on the terminal voltages.

A power supply device according to one aspect of the present invention has the imbalance reduction circuit described above and the plurality of electric accumulators.

In the power supply device having the plurality of electric accumulators, the configuration described above can lower the risk of the occurrence of a shortfall in electric power to be supplied, which can be caused when the temperature of the electric accumulators decreases when the equalization is performed on the terminal voltages of the electric accumulators.

In the imbalance reduction circuit, power supply unit and imbalance reduction method having such configurations described above, the temperature-related information acquisition unit acquires the temperature-related information related to the temperature of the plurality of electric accumulators. When the temperature-related information acquires by the temperature-related information acquisition unit satisfies the low temperature condition that is set as a condition where the discharge performance of the electric accumulators deteriorates, the equalization controller prohibits the discharge unit from executing the equalization process. Thus, when there is a risk of deteriorating the discharge performance of the electric accumulators due to the decrease in the temperature thereof, the accumulated electric charge amounts of the plurality of electric accumulators are not lowered by the equalization process that discharges the electric accumulators. As a result, the configuration described above can lower the risk of the occurrence of a shortfall in electric power to be supplied, which can be caused when the temperature of the electric accumulators decreases when the equalization is performed on the terminal voltages.

### Brief Description of the Drawings

[Fig. 1] Fig. 1 is a block diagram showing an example of the configurations of an imbalance reduction circuit using an imbalance reduction method according to an embodiment of the present invention, a power supply device having this imbalance reduction circuit, and a power supply system.
[Fig. 2] Fig. 2 is a graph showing a relationship between a temperature and resistance value of accumulating elements.
[Fig. 3] Fig. 3 is a flowchart showing an example of the operations of the power supply device shown in Fig. 1.
[Fig. 4] Fig. 4 is a flowchart showing an example of the operations of the power supply device shown in Fig. 1.

### Description of Embodiments

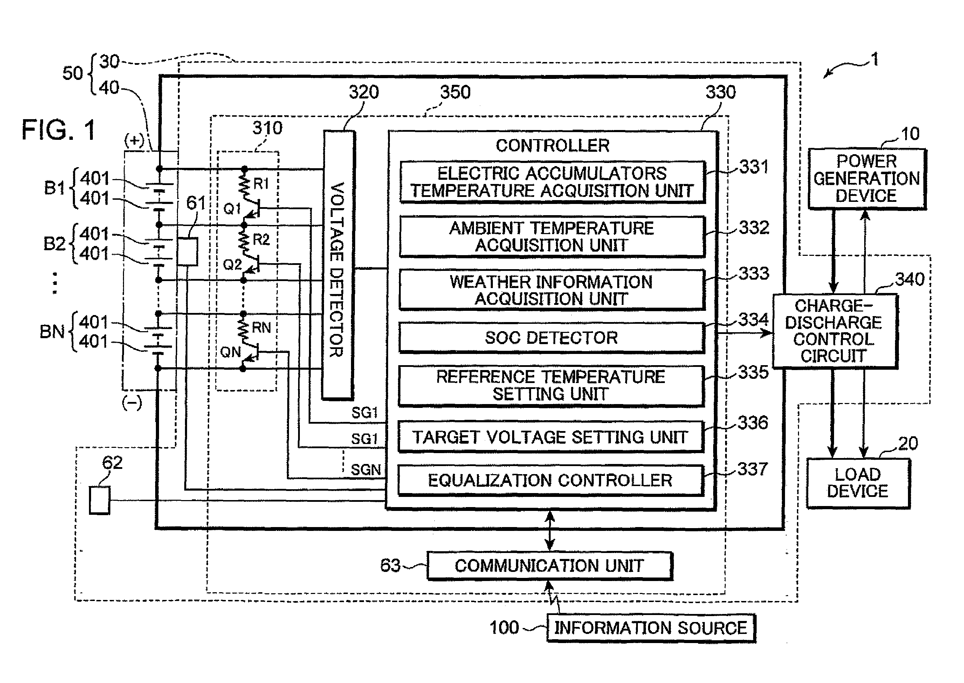

Embodiments according to the present invention are described hereinafter with reference to the diagrams. Note in each of the diagrams that the same configurations are designated the reference numerals and the description thereof is omitted. Fig. 1 is a block diagram showing an example of the configurations of an imbalance reduction circuit using an imbalance reduction method according to an embodiment of the present invention, a power supply device having this imbalance reduction circuit, and a power supply system.

A power system 1 shown in Fig. 1 is configured by a power generation device 10, power supply control device 30, and accumulating device 40. The power supply control device 30 and the accumulating device 40 configure a power supply device 50. The power supply device 50 is used as a variety of power supply devices, such as a battery pack, uninterruptible power supply device, a power generation device utilizing natural energy, an electric power regulating accumulating device for accumulating surplus electric power of a power generation device powered by an engine, and a load-leveling power. A load device 20 that receives a supply of electric power from the power generation device 10 or the accumulating device 40 is connected to the power supply device 50.

The power generation device 10 is, specifically, a power generation device such as a photovoltaic generation device (solar battery) that utilizes natural energy, or a generator powered by an engine. Note that the power supply device 50 may be configured to receive a supply of electric power from a commercial power supply instead of the power generation device 10.

The accumulating device 40 is configured by connecting N-number of electric accumulators B1, B2, ..., BN in series. The electric accumulators B1, B2, ..., BN are housed in a box that is not shown. Each of the electric accumulators B1, B2, ..., BN is configured by electrically connecting a plurality of accumulating elements 401 in series. Alkaline batteries such as nickel hydride batteries, organic batteries such as lithium-ion batteries, capacitors such as electric double-layer capacitors, or any other accumulating elements can be used as the accumulating elements 401.

Note that the number of electric accumulators, the number of accumulating elements 401, and the connection conditions of the electric accumulators and accumulating elements are not particularly limited. For example, each of the electric accumulators may be configured by connecting the plurality of accumulating elements 401 in series, in parallel, or both in series and parallel. Also, each of the electric accumulators may be one of the accumulating elements 401. The configuration of the accumulating device 40 also is not particularly limited to the one described above.

The power supply control device 30 is configured as, for example, an ECU (Electric Control Unit) for automobile use. The power supply control device 30 has an imbalance reduction circuit 350, temperature sensors 61, 62, and charge-discharge control circuit 340. The imbalance reduction circuit 350 has a discharge unit 310, voltage detector 320, controller 330, and communication unit 63.

The charge-discharge control circuit 340 charges, for example, surplus electric power generated by the power generation device 10 or regenerative electric power generated by the load device 20, to the accumulating device 40. In addition, when the current consumed by the load device 20 increases drastically, or when the amount of electric power generated by the power generation device 10 drops and the amount of electric power requested by the load device 20 exceeds the output of the power generation device 10, the charge-discharge control circuit 340 supplies the deficient power from the accumulating device 40 to the load device 20.

The charge-discharge control circuit 340 also stops or permits charging of the accumulating device 40 in response to a control signal issued by the controller 330.

The charge-discharge control circuit 340 controls charging and discharging of the accumulating device 40 in the manner described above, so that the SOC of the accumulating device 40 normally stays in a range of about 20% to 80%. On the other hand, in a load-leveling power supply or pug-in hybrid automobile that effectively utilizes nighttime electric power, the accumulating device 40 is charged until the SOC thereof increases to 100%, and is thereby controlled to discharge when energy is required by the load device 20.

The voltage detector 320 detects terminal voltages V1, V2, ..., VN of the respective electric accumulators B1, B2, ..., BN, and outputs thus obtained detected values to the controller 330. The voltage detector 320 is configured by using, for example, a switching circuit, not shown, which selects any one of the terminal voltages V1, V2, ..., VN, or an analog-digital converter, not shown, which converts the voltage selected by the switching circuit into a digital value and outputs the digital value to the controller 330.

The discharge unit 310 has N-number of resistors R1, R2, ... RN and N-number of transistors Q1, Q2, ..., QN. A series circuit of the resistor R1 and the transistor Q1 is connected in parallel with the electric accumulator B1, and a series circuit of the resistor R2 and the transistor Q2 is connected in parallel with the electric accumulator B2. Similarly hereinafter, a series circuit of a resistor and a transistor is connected in parallel with a corresponding electric accumulator. Note that the resistors R1, R2, ..., RN may be variable resistors.

The transistors Q1, Q2, ..., QN are turned ON/OFF according to equalization discharge signals SG1, SG2, ..., SGN from the controller 330. When the transistors Q1, Q2, ..., QN are turned ON, the electric accumulator that is connected in parallel with the transistor that is turned ON is discharged via the resistor.

The temperature sensor 61 is fixedly attached to, for example, the accumulating device 40. The temperature sensor 61 detects the temperature of the accumulating device 40. The temperature sensor 62 is disposed in a position exposed to the air. The temperature sensor 62 therefore detects the ambient temperature. The temperature of the electric accumulators B1, B2, ..., BN decreases gradually as the electric accumulators stop self-heating, and become equal to the ambient temperature. Therefore, the ambient temperature is equivalent to an example of a temperature that the temperature of the electric accumulators B1, B2, ..., BN is predicted to reach in the future.

The communication unit 63 is a communication interface circuit that performs communication with an external information source 100. The information source 100 is a server connected to a network such as the Internet or a wireless public line, a wireless transmitter, or a transmission device of a broadcasting system. A variety of wireless systems including wire communication and wireless communication can be used as the communication method for communicating between the communication unit 63 and the information source 100. The information source 100 transmits, to the communication unit 63, various weather information such as the ambient temperature, weather forecasts (forecasts of the ambient temperature), and frost advisory.

For example, if the power supply device 50 is a power supply device for automobile use, the communication unit 63 may be a receiving device that communicates with an on-vehicle unit used in ITS (Intelligent Transport System) promoted by the Ministry of Land, Infrastructure and Transport or in a car navigation system promoted by car manufacturers (e.g., P.8 to P.9 in the July 16, 2007 issue and P.77 to P.86 in the June 2, 2008 issue of Nikkei Electronics Magazine), or functions as such on-vehicle units, to receive the weather information from the information source 100 configured by a traffic information system.

The communication unit 63 may also be a receiving device that not only and necessarily executes communications but also receives the airwaves of radio or television broadcasts to acquire the weather information.

The controller 330 is configured by, for example, a CPU (Central Processing Unit) for executing a predetermined arithmetic process, ROM (Read Only Memory) in which a predetermined control program is stored, RAM (Random Access Memory) for temporarily storing data, analog-digital converter, peripheral circuit thereof, and the like.

The controller 330 executes, for example, the control program stored in the ROM and thereby functions as an electric accumulators temperature acquisition unit 331, ambient temperature acquisition unit 332, weather information acquisition unit 333, SOC detector 334, reference temperature setting unit 335, target voltage setting unit 336, and equalization controller 337. In this case, the electric accumulators temperature acquisition unit 331, ambient temperature acquisition unit 332 and weather information acquisition unit 333 correspond to an example of the temperature-related information acquisition unit.

Note that the charge-discharge control circuit 340 or load device 20 may include a part of or the whole controller 330.

The electric accumulators temperature acquisition unit 331 and ambient temperature acquisition unit 332 are configured using, for example, the analog-digital converter. The electric accumulators temperature acquisition unit 331 acquires information indicating the temperature of the accumulating device 40, based on a signal output from the temperature sensor 61. The ambient temperature acquisition unit 332 acquires information indicating the ambient temperature, based on a signal output from the temperature sensor 62.

The weather information acquisition unit 333 receives, through the communication unit 63, the weather information transmitted from the information source 100, such as, for example, a predictive value Tf of the ambient temperature in weather forecast, and receives the predictive value Tf as the information on an ambient temperature. Note that the weather information acquisition unit 333 may be configured to not only and necessarily acquire the quantified predictive value Tf but also to receive, through the communication unit 63, the weather information corresponding to a low temperature condition used as a determination condition of the equalization controller 337, as the information on an ambient temperature. Examples of the weather information include a frost advisory in the weather forecast.

Incidentally, as the traffic information system described above, there is known a technology where vehicles equipped with the on-vehicle system are used as probes to collect information indicating a wide range of road conditions from each vehicle (e.g., P.103 to P.107 in the May 8, 2006 issue and P.8 to P.9 in the July 16, 2007 issue ofNikkei Electronics Magazine). For example, when a vehicle is equipped with the power supply device 50, the weather information acquisition unit 333 may acquire information indicating a route in the traveling direction of the base vehicle from a car navigation device equipped in the base vehicle, and acquire, as the predictive value Tf of the ambient temperature, the ambient temperature that is measured in another vehicle (probe) existing on the route in the traveling direction of the base vehicle, from the abovementioned traffic information system.

The SOC detector 334 detects the SOC of the accumulating device 40 by converting, for example, a total of the terminal voltages V1, V2, ..., VN detected by the voltage detector 320, into a SOC by reference to, for example, a lookup table that is stored in the ROM in advance. Alternatively, the SOC detector 334 detects charge-discharge currents of the accumulating device 40 by means of, for example, a current detection circuit, not shown, integrates these charge-discharge currents to calculate the accumulated electric charge amount of the accumulating device 40, and then calculates the SOC based on the obtained accumulated electric charge amount. Various other methods can be used for detecting the SOC.

The reference temperature setting unit 335 sets reference temperatures α, β used as values for making a determination on the low temperature condition, such that the reference temperaturesα, β become lower as the SOC detected by the SOC detector 334 increases. In this case, the reference temperature α is used as the determination value of a temperature Tb, whereas the reference temperature β is used as the determination value for the ambient temperature Ta and the predictive value Tf of the ambient temperature. Normally the temperature Tb of the accumulating device 40 is higher than the ambient temperature since it heats by itself. Therefore, the reference temperature α is set higher than the reference temperature β. Note that the reference temperature α and the reference temperature β may be set at the same temperature.

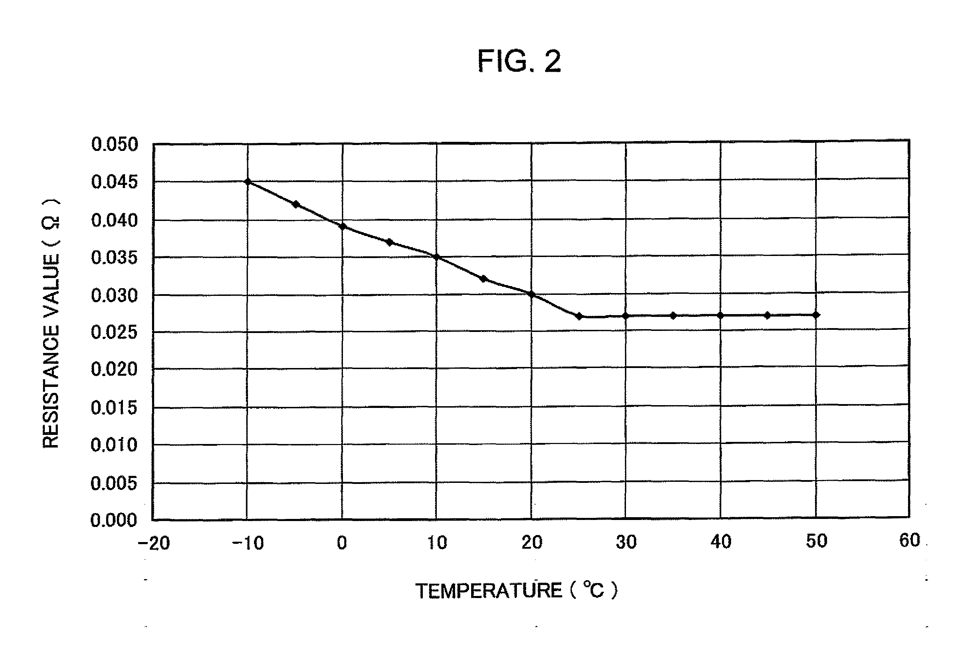

Fig. 2 is a graph showing a relationship between the temperature and resistance value of the accumulating elements 401 in the case where the accumulating elements 401 are nickel hydride secondary batteries. The horizontal axis represents the temperatures (°C) of the accumulating elements 401, and the vertical axis represents internal resistance values (Ω) of the accumulating elements 401. As shown in Fig. 2, when the temperature of the accumulating elements 401 is equal to or lower than 25 degrees C, the lower the temperature is, the higher the internal resistance becomes. When the internal resistance increases, the discharge performance of the accumulating elements 401 deteriorates, reducing a current value at which discharge can be made. For this reason, the temperature of the accumulating device 40 needs to be equal to or higher than a predetermined reference temperature in order to secure the amount of current required by the load device 20.

On the other hand, the greater the SOC, the larger the current value at which discharge can be made by the accumulating elements 401, and the lower the SOC, the lower the current value. Thus, in the case where the SOC is large, even when the reference voltage is lower than when the SOC is low, the amount of current required by the load device 20 can be ensured. Accordingly, the reference temperature setting unit 335 sets the reference temperatures α, β used as the values for making a determination on the low temperature condition, such that the reference temperatures α, β become lower as the SOC detected by the SOC detector 334 increases.

For example, during winter, even when the temperature Tb and the ambient temperature Ta satisfies the low temperature condition because the temperature Tb is less than the reference temperature α and the ambient temperature Ta is less than the reference temperature β, and consequently the equalization process is prohibited, the accumulating device 40 is charged to increase the SOC thereof, whereby the reference temperature setting unit 335 sets the reference temperatures α, β low. As a result, when the temperature Tb and the ambient temperature Ta become equal to or higher than the reference temperatures α, β respectively, the equalization process can be executed by the accumulating device 40.

The target voltage setting unit 336 sets the lowest voltage of the terminal voltages V1, V2, ..., VN detected by the voltage detector 320, as a target voltage Vtg.

The equalization controller 337 determines that imbalance is caused in the accumulating device 40, when the difference between the maximum voltage Vmax and the minimum voltage Vmin of the terminal voltage V1, V2, ..., VN detected by the voltage detector 320, in other words a voltage indicating the fluctuation of each terminal voltage, exceeds a pre-set determination threshold value Vth. Note that the equalization controller 337 may determine that imbalance is caused in the accumulating device 40, by using another method in addition to the example of using the difference between the maximum voltage Vmax and the minimum voltage Vmin as the voltage indicating the fluctuation of each terminal voltage.

Furthermore, when the equalization controller 337 determines that imbalance is caused in the accumulating device 40 and none of low temperature conditions A, B, C is established, the equalization controller 337 executes the equalization process for using the discharge unit 310 to discharge the electric accumulators B1, B2, ..., BN until the terminal voltage of each of the electric accumulators becomes substantially equal to the target voltage Vtg. Note that such an expression of "substantially equal" means to tolerate the voltage difference that is generated by an error in voltage detection performed by the voltage detector 320 or an error in controlling the discharge unit 310.

In addition to the example where the equalization controller 337 uses the discharge unit 310 to discharge the electric accumulators based on the terminal voltages V1, V2, ..., VN detected by the voltage detector 320 until each terminal voltage becomes substantially equal to the target voltage Vtg, zener diodes, for example, that have zener voltages equivalent to the target voltage Vtg may be connected in the resistors R1, R2, ..., RN in series so that each terminal voltage automatically becomes the target voltage Vtg when the transistors Q1, Q2, ..., QN are turned ON.

Moreover, when at least one of the low temperature conditions A, B, C is established regardless of whether imbalance is caused in the accumulating device 40 or not, the equalization controller 337 turns the transistors Q1, Q2, ..., QN OFF to prohibit the discharge unit 310 from executing the equalization process.

An example of the low temperature condition A can be such a condition where "the temperature Tb of the accumulating device 40 that is acquired by the electric accumulators temperature acquisition unit 331 falls below the reference temperature α set by the reference temperature setting unit 335." An example of the low temperature condition B can be such a condition where "the ambient temperature Ta that is acquired by the electric accumulators temperature acquisition unit 331 falls below the reference temperature β set by the reference temperature setting unit 335."

An example of the low temperature condition C can be such a condition where "the predictive value Tf of the ambient temperature that is acquired by the weather information acquisition unit 333 falls below the reference temperature β set by the reference temperature setting unit 335," or a condition where "the weather information acquisition unit 333 acquires pre-set information that indicates that the ambient temperature decreases (e.g., frost advisory)."

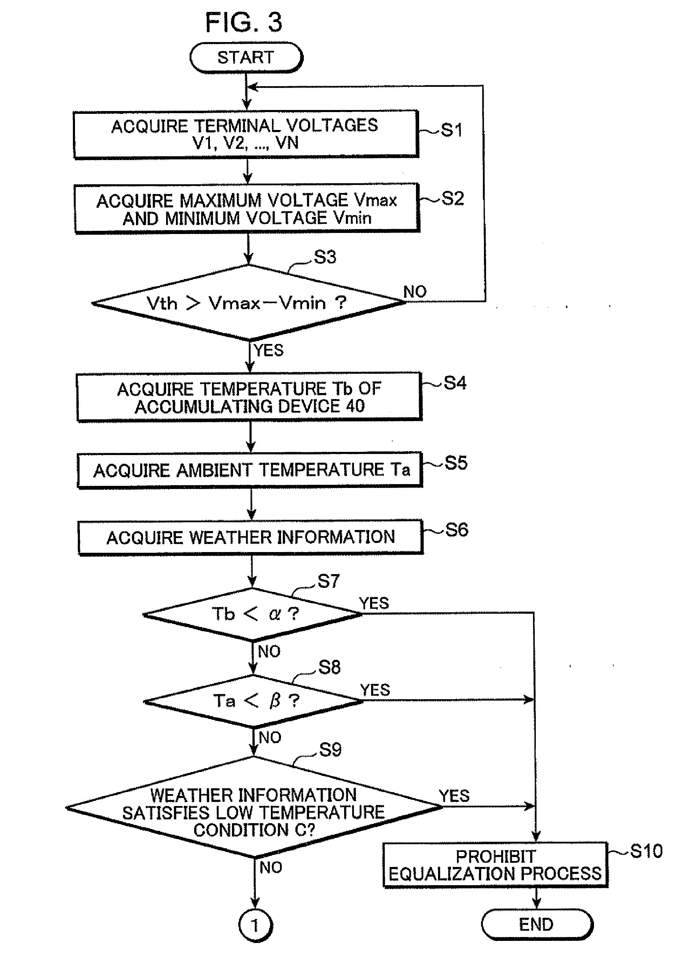

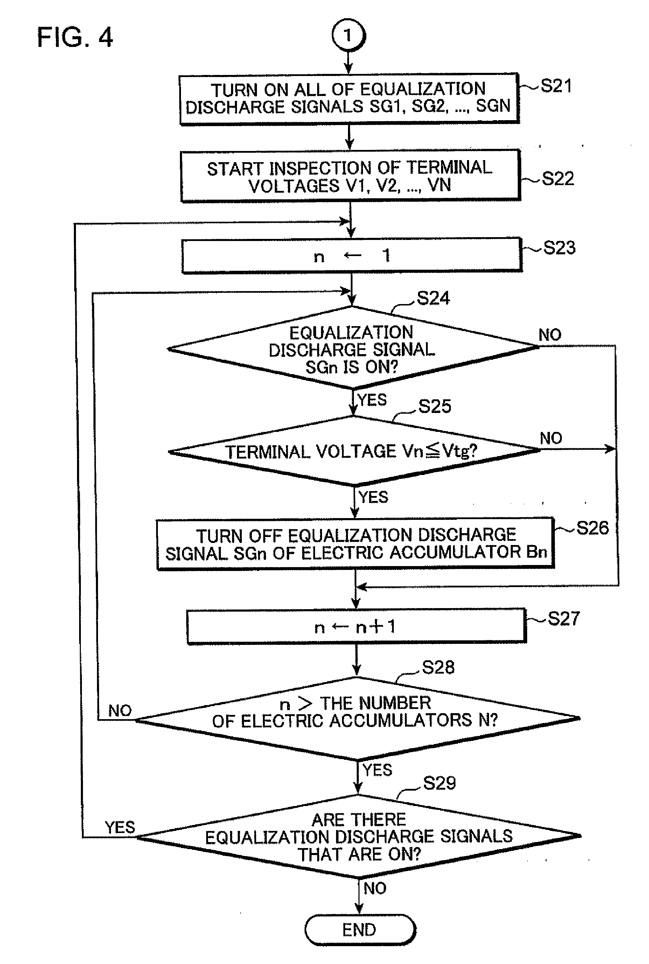

The operations of the power supply device 50 shown in Fig. 1 are described next. Figs. 3 and 4 are flowcharts each showing an example of the operations of the power supply device 50 shown in Fig. 1.

First, the operation of setting the reference temperatures α, β using the reference temperature setting unit 335 is executed constantly in parallel with the operations shown in the following flowcharts. Then, the voltage detector 320 detects the terminal voltages V1, V2, ..., VN of the respective electric accumulators B1, B2, ..., BN (step S1).

Next, the equalization controller 337 acquires the maximum voltage Vmax and the minimum voltage Vmin of the terminal voltages V1, V2, ..., VN (step S2). The equalization controller 337 then calculates the difference between the maximum voltage Vmax and the minimum voltage Vmin as the voltage indicating the fluctuation of each terminal voltage, and compares the difference between the maximum voltage Vmax and the minimum voltage Vmin with the determination threshold value Vth (step S3). When the difference is equal to or lower than the determination threshold value Vth (NO in step S3), the process returns to step S1 and the processes from steps S1 to S3 are repeated. When the difference exceeds the determination threshold value Vth (YES in step S3), the equalization controller 337 determines that imbalance is caused in the accumulating device 40, and the process proceeds to step S4.

In addition to the example where the equalization controller 337 determines the presence/absence of imbalance by comparing the difference between the maximum voltage Vmax and the minimum voltage Vmin with the determination threshold value Vth, the equalization controller 337 may determine the presence/absence of imbalance by, for example, comparing a difference between the average of the terminal voltages V1, V2, ..., VN and the minimum voltage Vmin with the determination threshold value Vth, or may determine the presence/absence of imbalance by using a different method.

Next, in step S4, the temperature Tb of the accumulating device 40 is detected by the temperature sensor 61 and acquired by the electric accumulators temperature acquisition unit 331 (step S4). Next, the ambient temperature Ta is detected by the temperature sensor 62 and acquired by the ambient temperature acquisition unit 332 (step S5).

Subsequently, the communication unit 63 receives, from the information source 100, the ambient temperature Ta, the predictive value Tf of the ambient temperature obtained by the weather forecast, the predictive value Tf which is the ambient temperature measured in the other vehicle (probe) existing on the route in the traveling direction of the base vehicle, the frost advisory, and various other weather information (step S6).

Subsequently, the equalization controller 337 checks whether the low temperature condition A is satisfied or not. In other words, the equalization controller 337 compares the temperature Tb of the accumulating device 40 that is acquired by the electric accumulators temperature acquisition unit 331, with the reference temperature α set by the reference temperature setting unit 335 (step S7).

When the temperature Tb is less than the reference temperature α (YES in step S7), the low temperature condition A is established. Since a current output performance of the accumulating device 40 deteriorates, executing the equalization process to keep discharging the electric accumulators B1, B2, ..., BN might not be able to supply the electric power required by the load device 20. Therefore, the equalization controller 337 prohibits the execution of the equalization process (step S10) and ends the process.

On the other hand, when the temperature Tb is equal to or higher than the reference temperature α (NO in step S7), the process proceeds to step S8 in order to check the low temperature condition B. Then, the equalization controller 337 checks whether the low temperature condition B is satisfied or not. In other words, the equalization controller 337 compares the ambient temperature Ta acquired by the electric accumulators temperature acquisition unit 331, with the reference temperature β set by the reference temperature setting unit 335 (step S8).

When the ambient temperature Ta is less than the reference temperature β (YES in step S8), the low condition B is established. Accordingly, when the accumulating device 40 stops charging/discharging and self-heating, the temperature Tb of the accumulating device 40 is predicted to reach the ambient temperature Ta in the future. Therefore, the current output performance of the accumulating device 40 is predicted to deteriorate in the future. Thus, executing the equalization process to keep discharging the electric accumulators B1, B2, ..., BN might not be able to supply the electric power required by the load device 20. Therefore, the equalization controller 337 prohibits the execution of the equalization process (step S10) and ends the process.

On the other hand, when the ambient temperature Ta is equal to or higher than the reference temperature β (NO in step S8), the process proceeds to step S9 in order to check the low temperature condition C. Then, the equalization controller 337 checks whether the low temperature condition C is satisfied or not. In other words, the equalization controller 337 compares the predictive value Tf of the ambient temperature that is acquired by the weather information acquisition unit 333, with the reference temperature β set by the reference temperature setting unit 335 (step S9).

When the predictive value Tf is less than the reference temperature β (YES in step S9), the low temperature condition C is established. Accordingly, when the accumulating device 40 stops charging/discharging and self-heating, the temperature Tb of the accumulating device 40 is predicted to reach the predictive value Tf in the future. Therefore, the current output performance of the accumulating device 40 is predicted to deteriorate in the future. Thus, executing the equalization process to keep discharging the electric accumulators B1, B2, ..., BN might not be able to supply the electric power required by the load device 20. Therefore, the equalization controller 337 prohibits the execution of the equalization process (step S10) and ends the process.

On the other hand, when the predictive value Tf is equal to or higher than the reference temperature β (NO in step S9), the process proceeds to step S21 in order to execute the equalization process.

According to the processes from steps S4 to S10 described above, it becomes possible to lower the risk of not being able to supply the electric power required by the load device 20 due to the equalization process is performed to discharge the accumulating device 40 under the conditions where the temperature of the accumulating device 40 decreases or is predicted to decrease.

Traditionally, for example, in the case where the power supply device 50 is used as an on-vehicle power supply, executing the equalization process to discharge the electric accumulators B1, B2, ..., BN after parking the vehicle might cause a problem where the engine is disabled due to low air temperature on the following morning.

However, in the processes of steps S6 and S9, the weather information acquisition unit 333 acquires the predictive value Tf of the ambient temperature on the following morning and the weather information such as a frost advisory from the weather forecast and other information, and then the equalization controller 337 determines the low temperature condition C based on the acquired weather information to determine whether the equalization process can be executed or not. Since the equalization process is not executed when the air temperature is predicted to decrease on the following morning even when the vehicle is parked in high air temperature, the risk of not being able to start the engine on the following morning can be lowered.

In step S21, the equalization controller 337 starts the equalization process by turning all of the equalization discharge signals SG1, SG2, ..., SGN ON and then turning the transistors Q1, Q2, ..., QN ON (step S21).

Next, the equalization controller 337 starts inspecting the terminal voltages V1, V2, ..., VN after starting the equalization process (step S22). The equalization controller 337 assigns "1" to a variable n and starts the voltage inspection from the first electric accumulator (step S23). The equalization controller 337 then determines whether the nth equalization discharge signal SGn is ON or not (step S24).

When the equalization discharge signal SGn is OFF (NO in step S24), the process proceeds to step S27. When the equalization discharge signal SGn is ON (YES in step S24), the equalization controller 337 determines whether the nth terminal voltage Vn is equal to or lower than the target voltage Vtg (step S25). When the terminal voltage Vn exceeds the target voltage Vtg (NO in step S25), the process proceeds to step S27. When the terminal voltage Vn is equal to or lower than the target voltage Vtg (YES in step S25), the equalization controller 337 turns the equalization discharge signal SGn OFF (turns a transistor Qn OFF) and ends discharging of an electric accumulator Bn (step S26).

In step S27 the equalization controller 337 adds "1" to the variable n (step S27) and compares the variable n with the number of electric accumulators N (step S28).

When the variable n is equal to or lower than the number of electric accumulators N (NO in step S28), the process proceeds to step S24 in order to inspect the terminal voltage of the next electric accumulator. When, on the other hand, the variable n exceeds the number of electric accumulators N (YES in step S28), the process proceeds to step S29.

Subsequently, in step S29 the equalization controller 337 determines whether there still are any ON equalization discharge signals, in other words, whether there still are any discharging electric accumulators (step S29).

When there still are discharging electric accumulators (YES in step S29), the processes of steps S23 to S29 are repeated. When there are no more discharging electric accumulators (NO in step S29), the discharge process is ended.

According to the equalization process from steps S21 to S29 described above, the electric accumulators B1, B2, ..., BN are discharged until the respective terminal voltages become the target voltage Vtg. Therefore, the terminal voltages V1, V2, ..., VN become less fluctuating and consequently equalized after the discharge is ended. In addition, according to the processes from steps S7 to S10, only when the temperature of the accumulating device 40 decreases or only when discharging the accumulating device 40 is considered to be able to supply the electric power required by the load device 20 even when the temperature of the accumulating device 40 become lower, the equalization process from steps S21 to S29 is executed. As a result, the equalization process can lower the risk of not being able to supply the electric power required by the load device 20.

Note that, although the three examples are illustrated as the low temperature conditions A (step S7), low temperature condition B (step S8) and low temperature condition C (step S9), at least one of the low temperature condition A (step S7), low temperature condition B (step S8) and low temperature condition C (step S9) may be used for determining whether the equalization process can be executed or not.

Furthermore, the configuration of the power supply device 50 shown in Fig. 1 is not limited to the one described above, thus any configuration is possible as long as it has the similar functions. For example, the controller 330 can be realized by installing and executing a program for embodying the variety of processes mentioned above.

Moreover, considered is an aspect in which the charge-discharge control circuit 340 functions as the controller 330. In this aspect, the controller 330 can be realized by installing a program for embodying the various processes shown in Figs. 3 and 4, into a microcomputer that configures the charge-discharge control circuit 340, and then executing this program.

In addition, determination on starting discharge of each electric accumulator may be performed not only by the controller 330 but also by the charge-discharge control circuit 340 or load device 20 by acquiring accumulating element information from the controller 330.

The embodiments of the present invention disclosed herein are merely examples, and the present invention is not limited thereto.

In other words, an imbalance reduction circuit according to one aspect of the present invention has: a temperature-related information acquisition unit for acquiring temperature-related information related to the temperature of a plurality of electric accumulators; a discharge unit for executing an equalization process for discharging the plurality of electric accumulators until terminal voltages of the respective electric accumulators become substantially equal to one another; and an equalization controller for prohibiting the discharge unit from executing the equalization process, when the temperature-related information acquired by the temperature-related information acquisition unit satisfies a low temperature condition that is set as a condition where the discharge performance of the plurality of electric accumulators deteriorates.

An imbalance reduction method according to one aspect of the present invention has: a step in which a temperature-related information acquisition unit acquires temperature-related information related to the temperature of a plurality of electric accumulators; a step in which a discharge unit executes an equalization process for discharging the plurality of electric accumulators until terminal voltages of the respective electric accumulators become substantially equal to one another; and a step in which an equalization controller prohibits the discharge unit from executing the equalization process, when the temperature-related information acquired by the temperature-related information acquisition unit satisfies a predetermined low temperature condition.

According to this configuration, the temperature-related information acquisition unit acquires the temperature-related information related to the temperature of the plurality of electric accumulators. When the temperature-related information acquired by the temperature-related information acquisition unit satisfies a low temperature condition that is set as a condition where the discharge performance of the electric accumulators deteriorates, the equalization controller prohibits the discharge unit from executing the equalization process. Thus, when there is a risk of deteriorating the discharge performance of the electric accumulators due to the decrease in the temperature thereof, the accumulated electric charge amounts of the plurality of electric accumulators are not lowered by the equalization process that discharges the electric accumulators. As a result, the configuration described above can lower the risk of the occurrence of a shortfall in electric power to be supplied, which can be caused when the temperature of the electric accumulators decreases when the equalization is performed on the terminal voltages.

Furthermore, it is preferred that the temperature-related information acquisition unit acquire, as the temperature-related information, a temperature that the temperature of the plurality of electric accumulators is predicted to reach in the future.

According to this configuration, a temperature that the temperature of the plurality of electric accumulators is predicted to reach in the future is acquired as the temperature-related information by the temperature-related information acquisition unit. Because the execution of the equalization process is prohibited when the temperature-related information satisfies the low temperature condition, when a possible future reduction in the temperature of the electric accumulators might cause a shortfall in electric power to be supplied, the accumulated electric charge amounts of the plurality of electric accumulators are not lowered by the equalization process that discharges the electric accumulators. As a result, it is possible to lower the risk of the occurrence of a shortfall in electric power to be supplied, which can be caused when the temperature of the electric accumulators decreases when the equalization is performed on the terminal voltages.

It is also preferred that the temperature-related information acquisition unit acquire information on an ambient temperature as the temperature-related information.

When the plurality of electric accumulators stops self-heating, the temperature thereof becomes substantially equal to the ambient temperature. Therefore, the information on an ambient temperature, such as a predictive value of the ambient temperature obtained from the ambient temperature of weather forecasts, or the ambient temperature obtained from other weather information, is suitable as the temperature that the temperature of the plurality of electric accumulators is predicted to reach in the future.

In addition, it is preferred that the temperature-related information acquisition unit receive a predictive value of an ambient temperature that is transmitted from an external transmission device, as the information on an ambient temperature.

According to this configuration, a predictive value of the ambient temperature that is transmitted from a transmission device of various information systems such as, for example, the Internet, public lines, traffic information systems and broadcasting stations can be used as the temperature-related information. Therefore, the equalization controller can determine whether to prohibit the execution of the equalization process, based on a predictive value of the temperature of the electric accumulators after a lapse of a longer period of time. As a result, it is possible to lower the risk of the occurrence of a shortfall in electric power to be supplied, which can be caused when the temperature of the electric accumulators is low after a lapse of a long period of time.

It is preferred that the plurality of electric accumulators be installed in a vehicle and that the temperature-related information acquisition unit receive, as the information on an ambient temperature, an ambient temperature that is measured in another vehicle existing on a route in a traveling direction of a base vehicle.

When the base vehicle reaches the position where the other vehicle exists, the ambient temperature measured by the other vehicle existing on the route in the traveling direction of the base vehicle is considered to become the ambient temperature of the base vehicle. Therefore, the ambient temperature measured by the other vehicle is suitable as the predictive value of the ambient temperature.

The temperature-related information acquisition unit may acquire the temperature of the electric accumulators and an ambient temperature as the temperature-related information, and the equalization controller may prohibit the discharge unit from executing the equalization process, when at least either the temperature of the electric accumulators or the ambient temperature that are acquired by the temperature-related information acquisition unit satisfies the low temperature condition.

In the case where the temperature of the electric accumulators satisfies the low temperature condition, when the equalization process is executed and the amount of accumulated electric power decreases already at the present time, a shortfall might occur in electric power to be supplied. Also, in the case where the ambient temperature satisfies the low temperature condition, a decrease in the amount of accumulated electric power might cause a shortfall in electric power to be supplied, after a lapse of a certain period of time. Therefore, by prohibiting the discharge unit from executing the equalization process when at least either the temperature of the electric accumulators or the ambient temperature satisfies the low temperature condition, the risk of the occurrence of a shortfall in electric power to be supplied in the low temperature of the electric accumulators can be lowered not only at the present time but also after a lapse of a certain period of time.

It is preferred that the low temperature condition be a condition where the temperature-related information indicates a temperature lower than a predetermined reference temperature, and that the imbalance reduction circuit further have a SOC detector for detecting the SOC of the plurality of electric accumulators, and a reference temperature setting unit for setting the reference temperature such that the reference temperature becomes lower as the SOC detected by the SOC detector increases.

If the SOC of the plurality of electric accumulators is large, the remaining accumulated electric charge amount is large even if it is decreased due to the equalization process that discharges the electric accumulators. If the remaining accumulated electric charge amount is large, the amount of current that can be output by the plurality of electric accumulators increases when the temperature of the electric accumulators is low. Accordingly, unlike a small SOC, a large SOC does not cause a shortfall in electric power even when the reference temperature prohibiting the execution of the equalization process is lowered. Therefore, the reference temperature setting unit is capable of increasing the number of opportunities to execute the equalization process, by setting the reference temperature such that the reference temperature becomes lower as the SOC detected by the SOC detector increases.

In addition, it is preferred that the imbalance reduction circuit further have a voltage detector for detecting a terminal voltage of each of the plurality of electric accumulators, and that the discharge unit execute the equalization process when a voltage indicating a fluctuation of each terminal voltage detected by the voltage detector exceeds a pre-set threshold voltage and the temperature-related information acquired by the temperature-related information acquisition unit does not satisfy the low temperature condition.

According to this configuration, the equalization process is executed when the fluctuations of the terminal voltages of the plurality of electric accumulators exceed the threshold voltage and the temperature-related information acquired by the temperature-related information acquisition unit does not satisfy the low temperature conditions, in other words, when it is considered that a short fall of electric power to be supplied is unlikely to occur even when the equalization process is executed. Therefore, while lowering the risk of the occurrence of a shortfall of electric power to be supplied when the temperature of the electric accumulators is low, imbalance in the terminal voltages of the plurality of electric accumulators can be reduced.

A power supply device according to one aspect of the present invention has the imbalance reduction circuit described above and the plurality of electric accumulators.

In the power supply device having the plurality of electric accumulators, the configuration described above can lower the risk of the occurrence of a shortfall in electric power to be supplied, which can be caused when the temperature of the electric accumulators decreases when the equalization is performed on the terminal voltages of the electric accumulators.

### Industrial Applicability

The imbalance reduction circuit according to the present invention, the power supply device using the same, and the imbalance reduction method can be suitably used in electronic devices such as portable personal computers, digital cameras and cellular phones, vehicles such as electric vehicles and hybrid cars, as well as battery-mounted devices and systems such as power supply systems comprised of the combination solar batteries or power generation devices and secondary batteries.

## Claims

1. An imbalance reduction circuit, comprising:
a temperature-related information acquisition unit for acquiring temperature-related information related to the temperature of a plurality of electric accumulators;
a discharge unit for executing an equalization process for discharging the plurality of electric accumulators until terminal voltages of the respective electric accumulators become substantially equal to one another; and
an equalization controller for prohibiting the discharge unit from executing the equalization process, when the temperature-related information acquired by the temperature-related information acquisition unit satisfies a low temperature condition that is set as a condition where the discharge performance of the plurality of electric accumulators deteriorates.

2. The imbalance reduction circuit according to claim 1, wherein the temperature-related information acquisition unit acquires, as the temperature-related information, a temperature that the temperature of the plurality of electric accumulators is predicted to reach in the future.

3. The imbalance reduction circuit according to claim 2, wherein the temperature-related information acquisition unit acquires information on an ambient temperature as the temperature-related information.

4. The imbalance reduction circuit according to claim 3, wherein the temperature-related information acquisition unit receives a predictive value or an ambient temperature that is transmitted from an external transmission device, as the information on an ambient temperature.

5. The imbalance reduction circuit according to claim 4, wherein
the plurality of electric accumulators are installed in a vehicle, and
the temperature-related information acquisition unit receives, as the information on an ambient temperature, an ambient temperature that is measured in another vehicle existing on a route in a traveling direction of a base vehicle.

6. The imbalance reduction circuit according to claim 1, wherein
the temperature-related information acquisition unit acquires the temperature of the electric accumulators and an ambient temperature as the temperature-related information, and
the equalization controller prohibits the discharge unit from executing the equalization process, when at least either the temperature of the electric accumulators or the ambient temperature that are acquired by the temperature-related information acquisition unit satisfies the low temperature condition.

7. The imbalance reduction circuit according to any one of claims 1 to 6, wherein the low temperature condition is a condition where the temperature-related information indicates a temperature lower than a predetermined reference temperature, and the imbalance reduction circuit further comprises:
a SOC detector for detecting the SOC of the plurality of electric accumulators; and
a reference temperature setting unit for setting the reference temperature such that the reference temperature becomes lower as the SOC detected by the SOC detector increases.

8. The imbalance reduction circuit according to any one of claims 1 to 7, further comprising:
a voltage detector for detecting a terminal voltage of each of the plurality of electric accumulators,
wherein the discharge unit executes the equalization process when a voltage indicating a fluctuation of each terminal voltage detected by the voltage detector exceeds a pre-set threshold voltage and the temperature-related information acquired by the temperature-related information acquisition unit does not satisfy the low temperature condition.

9. A power supply device, comprising:
the imbalance reduction circuit described in any one of claims 1 to 8; and
the plurality of electric accumulators.

10. An imbalance reduction method, comprising:
a step in which a temperature-related information acquisition unit acquires temperature-related information related to the temperature of a plurality of electric accumulators;
a step in which a discharge unit executes an equalization process for discharging the plurality of electric accumulators until terminal voltages of the respective electric accumulators become substantially equal to one another; and
a step in which an equalization controller prohibits the discharge unit from executing the equalization process, when the temperature-related information acquired by the temperature-related information acquisition unit satisfies a predetermined low temperature condition.
